Europäisches Patentamt

European Patent Office

Office européen des brevets

(19)

(11) Numéro de publication: **0 070 948**
**B1**

(12) # FASCICULE DE BREVET EUROPEEN

(45) Date de publication du fascicule du brevet:
10.07.85

(51) Int. Cl.⁴: **H 04 B 1/66**

(21) Numéro de dépôt: **81430023.2**

(22) Date de dépôt: **28.07.81**

(54) Procédé de codage de la voix et dispositif de mise en oeuvre dudit procédé.

(43) Date de publication de la demande:
09.02.83 Bulletin 83/6

(45) Mention de la délivrance du brevet:
10.07.85 Bulletin 85/28

(84) Etats contractants désignés:
**DE FR GB**

(56) Documents cités:
FR - A - 2 285 032
FR - A - 2 389 277

ICASSP 80 PROCEEDINGS OF THE IEEE
INTERNATIONAL CONFERENCE ON ACOUSTICS,
SPEECH AND SIGNAL PROCESSING, volume 2, 9-11
avril 1980 DENVER IEEE NEW YORK (US) C. GALAND et
al. "16 KBPS real time QMF sub-band coding
implementation" pages 332 à 335
ICASSP 79 PROCEEDINGS OF THE IEEE
INTERNATIONAL CONFERENCE ON ACOUSTICS,
SPEECH AND SIGNAL PROCESSING, Washington, 2-4
avril 1979 IEEE NEW YORK (US) A. BARABELL et al.
"Sub-band coder design incorporating quadrature filters
and pitch prediction", pages 530 à 533
IEEE TRANSACTIONS ON ACOUSTICS, SPEECH AND
SIGNAL PROCESSING, volume ASSP-27, no. 5, octobre
1979 IEEE NEW YORK (US) J.M. TRIBOLET et al.
"Frequency dmain coding of speech", pages 512 à 530

(73) Titulaire: **International Business Machines Corporation,
Old Orchard Road, Armonk, N.Y. 10504 (US)**
(84) Etats contractants désignés: **DE GB**

(73) Titulaire: **Compagnie IBM FRANCE, 5 Place Vendôme,
F-75000 Paris 1er (FR)**
(84) Etats contractants désignés: **FR**

(72) Inventeur: **Nussbaumer, Henri, La Font Antique,
F-06610-La Gaude (FR)**

(74) Mandataire: **Tublana, Max, Compagnie IBM France
Département de Propriété Industrielle, F-06610 La
Gaude (FR)**

(56) Documents cités: (suite)
**THE BELL SYSTEM TECHNICAL JOURNAL, volume 55,
no. 8, octobre 1976 NEW YORK (US) R.E. CROCHIERE et
al. "Digital coding of speech in sub-bands", pages 1069
à 1085
IEEE International Conference on Acoustics, Speech
and Signal Processing, 1978, p. 320 à 325
IBM Technical Disclosure Bulletin, Vol. 19, No. 9,
February 1977, p. 3438, 3439**

**0 070 948**

## Description

Il existe de nombreux procédés de codage du signal électrique d'origine vocale permettant de minimiser le nombre de bits nécessaires audit codage, tout en conservant suffisamment de précision pour que le signal puisse être fidélement reproduit lors du décodage. On citera notamment le sytème de codage en sous-bades décrit lors d'une présentation faite par D. Esteban et C. Galand à la Conférence Internationale IEEE de 1978 qui s'est tenue à Tulsa, Oklahoma, du 10 au 12 avril 1978 (voir dans la publication sur IEEE International Conference on Acoustics, Speech and Signal Processing de 1978, l'article intitulé: »32 KBps CCITT Compatible Split Band Coding«). Le système décrit procède essentiellement par découpage de la bande basses-fréquences (bande téléphonique) du signal à traiter en plusieurs sous-bandes et quantification optimale de l'information contenue dans chaque sous-bande. En outre, lors du découpage en sous-bandes le signal est ré-échantillonné (opération dite de décimation) de manière à maintenir constant le taux de l'information soumise au filtrage. Le codage en sous-bandes tel que décrit ci-dessus fournit de très bons résultats. Ces résultats peuvant cependant être améliorés en tenant compte de propriétés fondamentales de la voix et notamment des caractéristiques de la bande dite de base.

La présente invention a pour objet un procédé de codage de la voix en sous-bandes exploitant au mieux les caractéristiques de la bande dite de base du signal à coder.

Plus précisément le procédé e la présente invention procède par découpage de la bande téléphonique du signal vocal en N sous-bandes étroites fournissant chacune deux informations en quadrature, dérivation à partir desdites informations en quadrature d'informations phase et amplitude du signal contenu dans chacune desdites sous-bandes, et codage desdites informations phase et amplitude.

D'autres objets, caractéristiques et avantages de la présente invention ressortiront mieux de l'exposé qui suit fait en référence aux dessins annexés à ce texte, qui représentent un mode de réalisation préféré de celle-ci.

Figure 1 dispositif de codage en sous-bandes de l'art antérieur.

Figure 2 schéma de princips du codeur de l'invention.

Figure 3 schéma d'un des éléments du dispositif de l'invention.

Figures 4 et 6 spectres en fréquences de filtres utilisés dans l'invention.

Figure 5 schéma d'un des éléments de l'invention.

Figures 7 et 8 détails de filtres utilisés dans l'invention.

Figures 9 et 10 modes de réalisations de filtres destinés au codeur de l'invention.

Figures 11 et 12 modes de réalisation du codeur de l'invention.

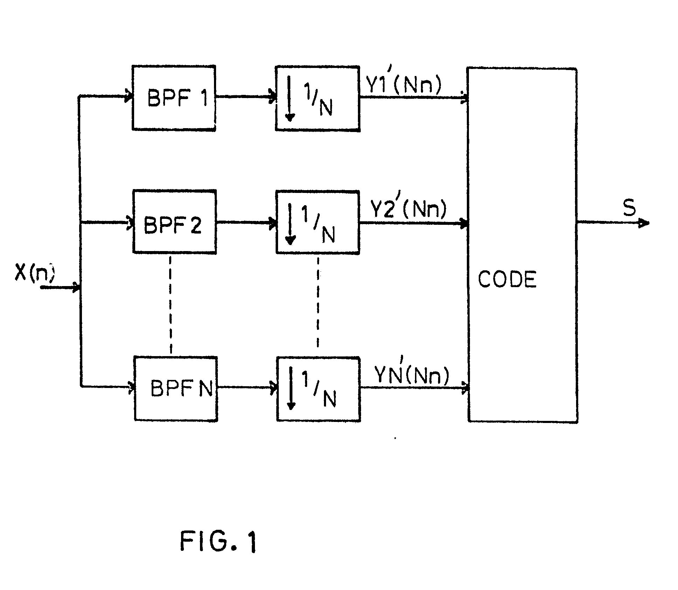

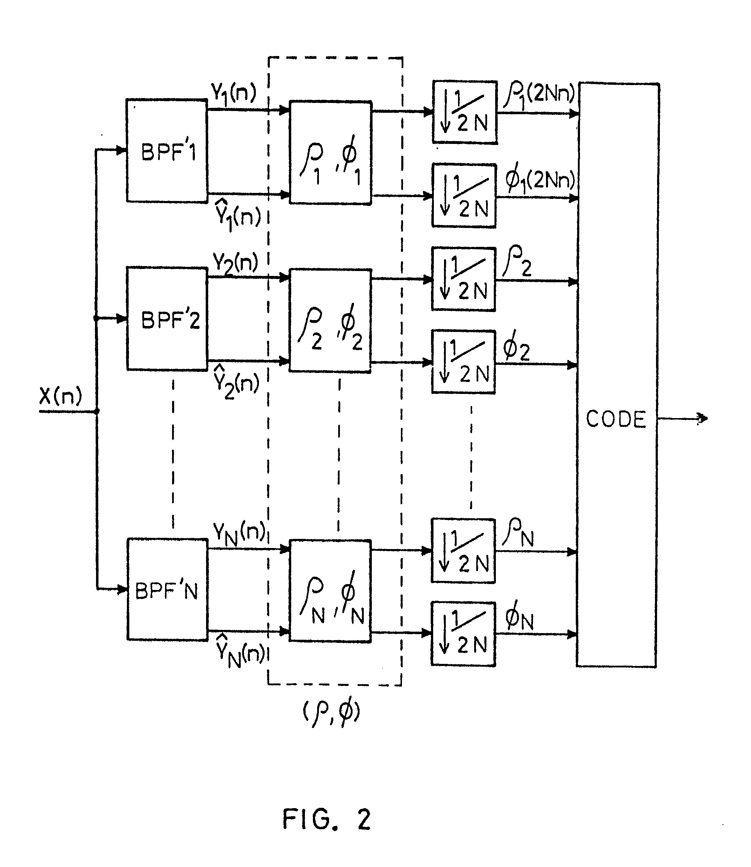

La figure 1 montre le principe de codage en sous-bandes dont un mode de réalisation a été décrit dans le brevet français No. 7 713 995 publié sous le numéro 2 389 277 et intitulé: »Procédé de quantification à allocation dynamique du taux de bits disponible, et dispositif de mise en oeuvre dudit procédé«. Un dispositif semblable a aussi été décrit dans le brevet européen 0 002 998 intitulé: »Procédé de compression de données relatives au signal vocal et dispositif mettant en oeuvre ledit procédé«. Dans ce dernier brevet, le codage en sous-bandes est utilisé pour coder la partie basses-fréquences du signal vocal. Pour ce qui est du principe du codage en sous-bandes, on notera, comme le montre la figure 1 que les échantillons x(n) du signal à coder (bande dite de base du signal) sont soumis à un banc de N filtres passe-bandes BPFI à BPFN dont les bandes passantes sont adjacentes et se juxtaposent pour couvrir au moins partiellement la bande basse-fréquences dans laquelle se situe le spectre du signal fournissant les échantillons x(n). Le taux d'information à la sortie du banc e filtres, c'est-à-dire le nombre d'échantillons par unité de temps sur l'ensemble des N sous-bandes fournies par le filtre, est maintenu le même que celui appliqué à l'entrée du banc de filtres, par une opération dite d décimation. Cette opération est réalisée en ré-échantillonnant le signal de chaque sous-bande par prélèvement d'un échantillon sur N seulement. Les échantillons des sous-bandes décimées, soit $y'_1(Nn)$ à $y'_N(Nn)$ sont alors soumis à une opération de quantification (ou de requantification, selon le cas) dans le dispositif désigné par CODE. Ce dispositif CODE a été décrit en détail dans les brevets français et européen cités plus haut. Les opérations de filtrage en sous-bandes et quantification (ou requantification) introduisent des distorsions ou bruit. Or, en pratique, le signal de bande de base de la voix est soit non voisé, soit voisé. Dans le premier cas, l'énergie moyenne du signal de la bande de base est faible, ce qui minimise l'importance des bruits de quantification qui ne font qu'ajouter du bruit au bruit. Par contre, dans le second cas, le signal de la bande de base contient la fréquence fondamentale de la voix et ses harmoniques. Par conséquent, si le nombre N de sous-bandes est convenablement choisi (N = 16 ou 32 par exemple), on peut s'attendre à ce que, pour les sons voisés, les sous-bandes ne contiennent que des fréquences pures. On a donc tout intérêt à exploiter au mieux ces propriétés, notamment en utilisant un dispositif réalisé selon le schéma de la figure 2.

Les échantillons x(n) de la bande de base sont appliqués à un banc de N filtres passe-bandes BPF'I à BPF'N ayant des bandes passantes semblables à celles des filtres BPFI à BPFN du dispositif de la figure 1. Mais les filtres BPF'I à BPF'N délivrent les composantes en quadrature de chaque signal filtré. On obtient donc en sortie des filtres BPF'I à BPF'N les signaux désignés ici par $y_1(n)$ à $y_N(n)$ et leurs conjugués $\hat{y}_1(n)$ à $\hat{y}_N(n)$. En d'autres termes, chaque filtre passe-bande délivre une paire de signaux en quadrature. Un dispositif $(\rho, \Phi)$ déduit de chaque paire de signaux en quadrature une

2

information d'amplitude ($\rho$) et une information de phase ($\Phi$) tels que:

$$\rho_i(n) = \sqrt{y_i^2(n) + \hat{y}_i^2(n)} \text{ et } \Phi_i(n) = \text{Arc tg } \frac{\hat{y}_i}{y_i}.$$

i    désignant ici le rang de la sous-bande considérée.

Les signaux $\rho_i(n)$ et $\Phi_i(n)$ ainsi obtenus sont ensuite décimés par prélèvement d'un échantillon sur 2N et l'on obtient des couples $\rho_i(2Nn)$ et $\Phi_i(2Nn)$. Enfin les informations $\rho(2Nn)$ et $\Phi(2Nn)$ des N sous-bandes sont quantifiés (ou requantifiés) à l'aide d'un dispositif CODE semblable à celui de la figure 1.

Le banc de filtres passe-bande du dispositif de la figure 2 constitue l'élément le plus critique.

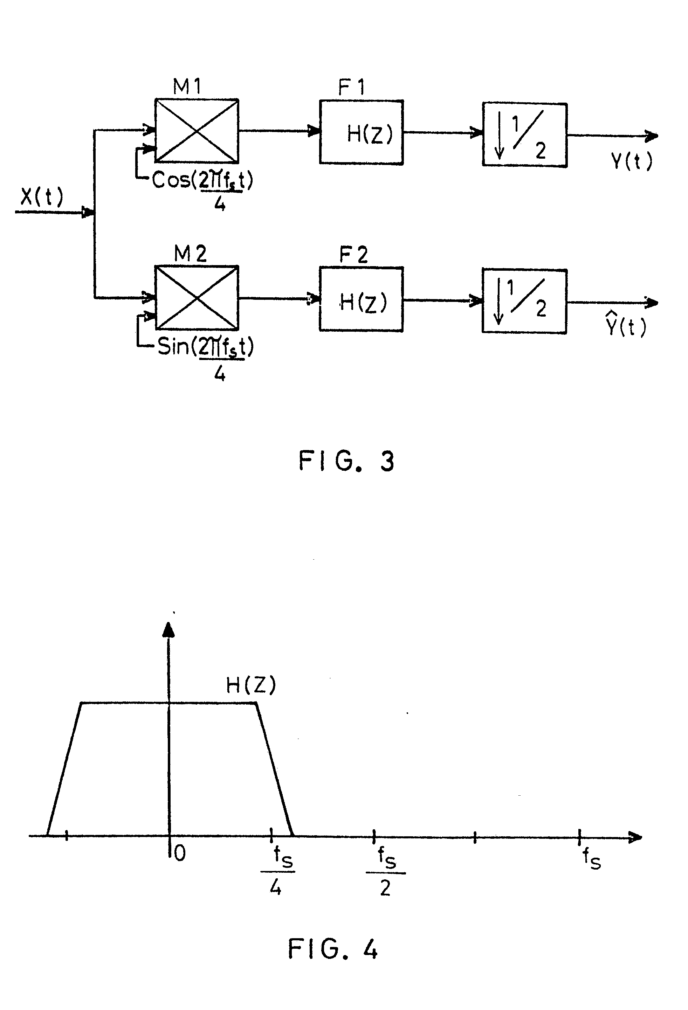

En effet supposons que l'on désigne par x(t) le signal de bande de base fournissant les échantillons x(n) et par fs/2 la fréquence la plus élevée du spectre de x(t), le signal x(t) est échantilloné à sa fréquence de Nyquist fs pour fournir les échantillons x(n). Ce signal x(t) doit être scindé en sous-bandes fournissant chacune deux composantes en quadrature ayant des caractéristiques telles qu'ils puissent être recombinés sur l'ensemble des sous-bandes pour fournir une reconstruction parfaite du signal x(t) d'origine. On supposera tout d'abord que l'on veuille simplement scinder le signal x(t) en deux composantes en quadrature telles que le signal x(t) puisse être parfaitement reconstruit à partir de ces signaux en quadrature. Ces signaux en quadrature sont échantillonnés à la fréquence fs/2. On peut accepter une définition quelque peu imparfaite desdites composantes en quadrature, pourvu qu'à la reconstruction le signal obtenu soit une image parfaite du signal x(t) d'entrée. On utilisera le schéma dit de filtre complexe de la figure 3. Le signal x(t) d'entrée est modulé en M1 par cos $(2\pi fs\, t/4)$ et en M2 par sin $(2\pi fs\, t/4)$. Les signaux sortant de M1 et M2 sont ensuite filtrés par des filtres passe-bas désignés par F1 et F2 avant une fréquence de coupure à 3dB à fs/4 (voir figure 4). On a désigné par H(Z) la fonction de transfert en Z des filtres passe-bas. Les signaux sortant des filtres H(Z) échantillonnés à la fréquence fs/2 sont désignés par y(t) et $\hat{y}(t)$. Les transformées en Z, Y(Z) e $\hat{y}(t)$ et Y(Z) de y(t) obéissent aux relations:

$$Y(Z) = \frac{1}{2} \sum_{l=0}^{1} [X((-1)^l jZ) + X(-(-1^l)jZ)]\, H((-1)^l Z) \tag{1}$$

$$Y(Z) = \frac{1}{2j} \sum_{l=0}^{1} [X((-1)^l jZ) - X(-(-1)^l jZ)]\, H((-1)^l Z) \tag{2}$$

où  x(Z) est la transformée en Z de x(t); et $j = \sqrt{-1}$.

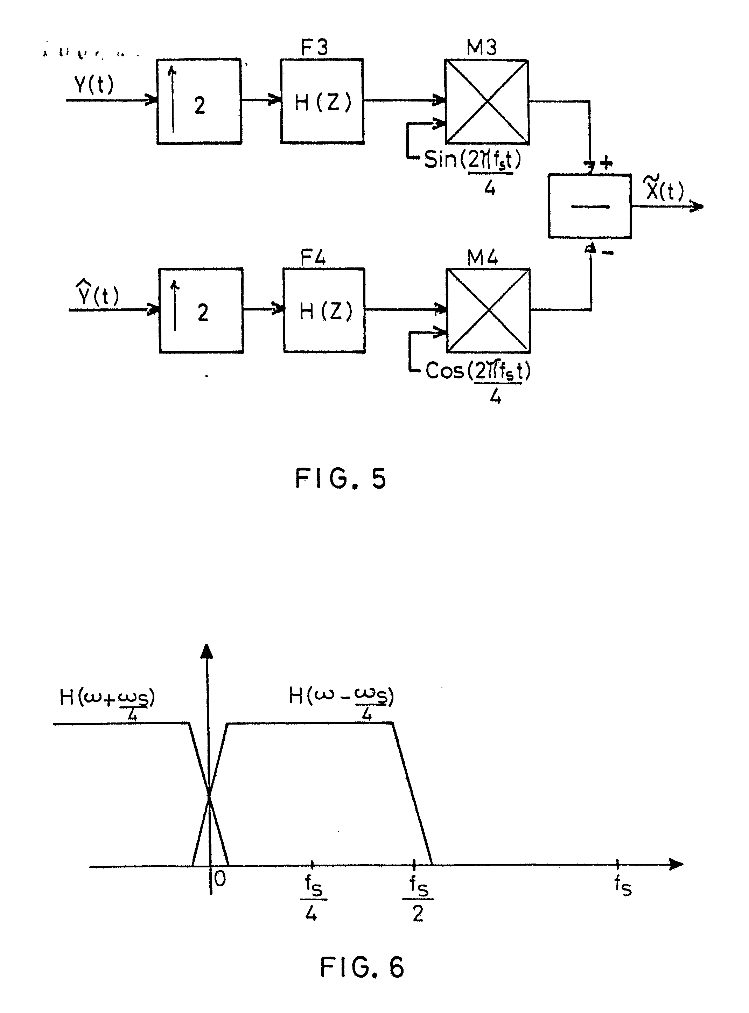

On a représenté sur la figure 5 le schéma du dispositif de reconstruction du signal x(t) à partir de ses composantes en quadrature. Les composantes y(t) et $\hat{y}(t)$ sont soumises à une opération d'interpolation au cours de laquelle on rajoute un échantillon nul entre deux échantillons consécutifs de y(t) et $\hat{y}(t)$. Puis les signaux interpolés sont filtrés par des filtres F3 et F4 ayant pour fonction de transfert en Z, H(Z). Les sorties de F3 et F4, sont modulées en M3 et M4 par sin $(2\pi fs\, t)/4$ et cos $(2\pi fs\, t)/4$ respectivement. La sortie de M4 est soustraite de celle de M3 pour fournir $\tilde{x}(t)$. On utilise le signal » ~ « pour montrer qu'il s'agit du signal x(t) reconstruit.

Soit $\tilde{x}(Z)$ la transformée en Z du signal reconstruit $\tilde{x}(t)$. On a donc:

$$\begin{aligned}
\tilde{x}(Z) = \frac{1}{4j} \sum_{l=0}^{1} &[X(-(-1)^l Z) + X((-1)^l Z)]\, H((-1)^l jZ)\, H(jZ) \\
&- [X((-1)^l Z) + X(-(-1)^l Z)]\, H(-(-1)^l jZ)\, H(-jZ) \\
&- [X(-(-1)^l Z) - X((-1)^l Z)]\, H((-1)^l jZ)\, H(jZ) \\
&- [X((-1)^l Z) - X(-(-1)^l Z)]\, H(-(-1)^l jZ)\, H(-jZ)
\end{aligned} \tag{3}$$

$$\tilde{X}(Z) = \frac{1}{2j} \sum_{l=0}^{1} X((-1)^l Z) \cdot H((-1)^l jZ)) \cdot H(jZ) - x((-1)^l Z) \cdot H(-(-1)^l jZ) \cdot H(-jZ) \tag{4}$$

$$\tilde{X}(Z) = \frac{X(Z)}{2j} [H^2(jZ) - H^2(-jZ)]. \tag{5}$$

Supposons que H soit un filtre symétrique de longueur K pair. La transformée de Fourier $H(e^{i\omega T})$ de H peut s'écrire:

$$H(e^{j\omega T}) = H(\omega) e^{-j(K-1)\pi\omega/\omega_s} \tag{6}$$

or

$$\omega_s T = 2\pi, \text{ donc } j = e^{j\omega_s T/4}$$

donc

$$H(jZ) \longrightarrow H\left(\omega + \frac{\omega_s}{4}\right) e^{-j(K-1)\pi\omega/\omega_s} \ e^{-j(K-1)\pi/4}$$

$$H(-jZ) \longrightarrow H\left(\omega - \frac{\omega_s}{4}\right) e^{-j(K-1)\pi\omega/\omega_s} \ e^{-j(K-1)\pi/4}$$

d/où

$$\check{X}(e^{j\omega T}) = X\left(\frac{e^{j\omega t}}{2j}\right) e^{-j(K-1)\omega T} \left[ H^2\left(\omega + \frac{\omega_s}{4}\right) e^{-j(K-1)\pi/2} - H^2\left(\omega - \frac{\omega_s}{4}\right) e^{j(K-1)\pi/2} \right]. \tag{7}$$

Puisque K est pair, K−1 est impair, donc si on suppose que K=4k on obtient:

$$e^{-j(K-1)\pi/2} = e^{j\pi/2} = j.$$

Dans ce cas, on obtient:

$$\check{X}(e^{j\omega T}) = \frac{X(e^{j\omega T})}{2} e^{-j(K-1)\omega T} \left[ H^2\left(\omega + \frac{\omega_s}{4}\right) + H^2\left(\omega - \frac{\omega_s}{4}\right) \right]. \tag{8}$$

Pour $K = 4k + 2$, on a $e^{-j(K-1)\pi/2} = e^{-j\pi/2} = -j$

et dans ce cas,

$$\check{X}(e^{j\omega T}) = -\frac{X(e^{j\omega T})}{2} e^{-j(K-1)\omega T} \left[ H^2\left(\omega + \frac{\omega_s}{4}\right) + H^2\left(\omega - \frac{\omega_s}{4}\right) \right]. \tag{9}$$

Si l'on suppose que:

$$H^2\left(\omega + \frac{\omega_s}{4}\right) + H^2\left(\omega - \frac{\omega_s}{4}\right) = 1 \tag{10}$$

pour K=4k on a:

$$\check{X}(e^{j\omega T}) = \frac{X(e^{j\omega T})}{2} e^{-j(K-1)\omega T} \tag{11}$$

et pour K=4k+2 on a:

$$\check{X}(e^{j\omega T}) = -\frac{X(e^{j\omega T})}{2} e^{-j(K-1)\omega T}. \tag{12}$$

Ceci montre que pourvu que la condition (10) soit vérifiée, I signal d'origine peut être parfaitement reconstruit à partir de ses composantes, avec un retard de (K−1) échantillons et un coefficient de multiplication de $\pm 1/2$. La condition (10) signifie en particulier que l'amplitude du filtre passebas H à la fréquence fs/4 doit être de −3dB (voir la figure 4). La figure 6 montre les caractéristiques dans le domaine des fréquences des branches de décomposition du signal x(t) en ses composantes y(t) et ŷ(t) (voir figure 3).

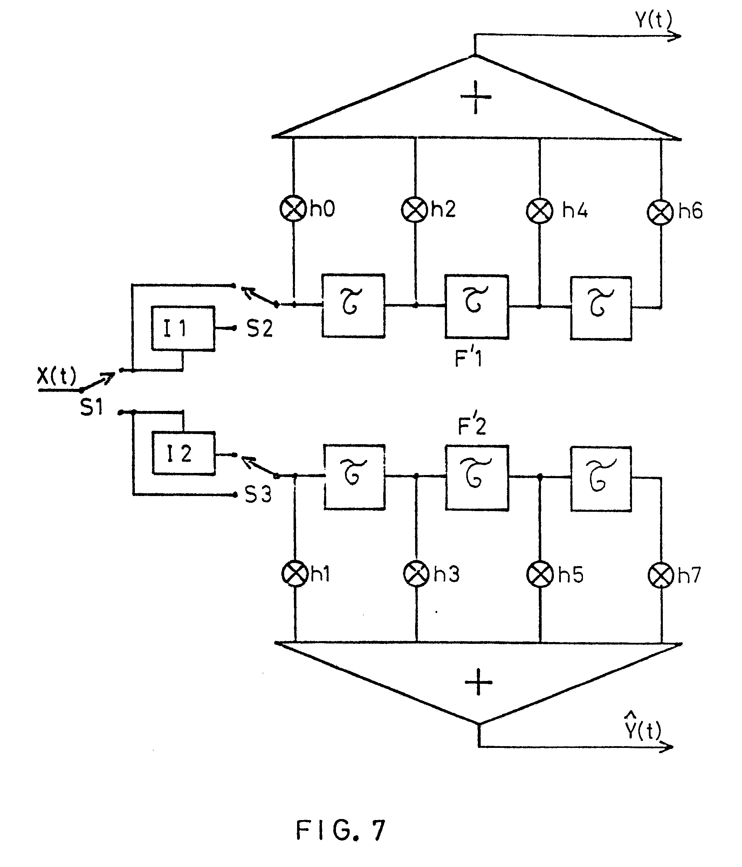

En pratique, les multiplications par cos $(2\pi fs\,t/4)$ et sin $(2\pi fs\,t)/4$ du signal échantillonné sont équivalentes à des multiplications cycliques des échantillons par les séquences (1, 0, −1, 0) et (0, 1, 0, −1) respectivement. D'autre part, comme le montre la figure 3, les signaux sortant des filtres F1 et F2 sont sous-échantillonnés à la fréquence fs/2. Donc les opérations de filtrage de F1 et F2 peuvent être réalisées à l'aide de deux filtres numériques travaillant à la fréquence fs/2 au lieu de fs, et comportant K/2 prises au lieu de K. La figure 7 montre un mode de réalisation du dispositif de la figure 3, ayant les propriétés recherchées. Le signal x(t) (ou ses échantillons x(n)) est appliqué à un commutateur S1 relié par ailleurs à des circuits de commutation comportant des inverseurs I1 et I2 et des commutateurs S2 et S3. Les sorties de S2 et S3 sont respectivement reliées à des filtres numériques F1' et F2' délivrant respectivement les composantes y(t) et ŷ(t) en quadrature. Les coefficients h0, h1, h2, h3, h4, h5, etc. sont définis pour le filtre d'origine ayant la fonction de transfert H (filtre basse-bas coupant à —3dB à fs/4 défini plus haut).

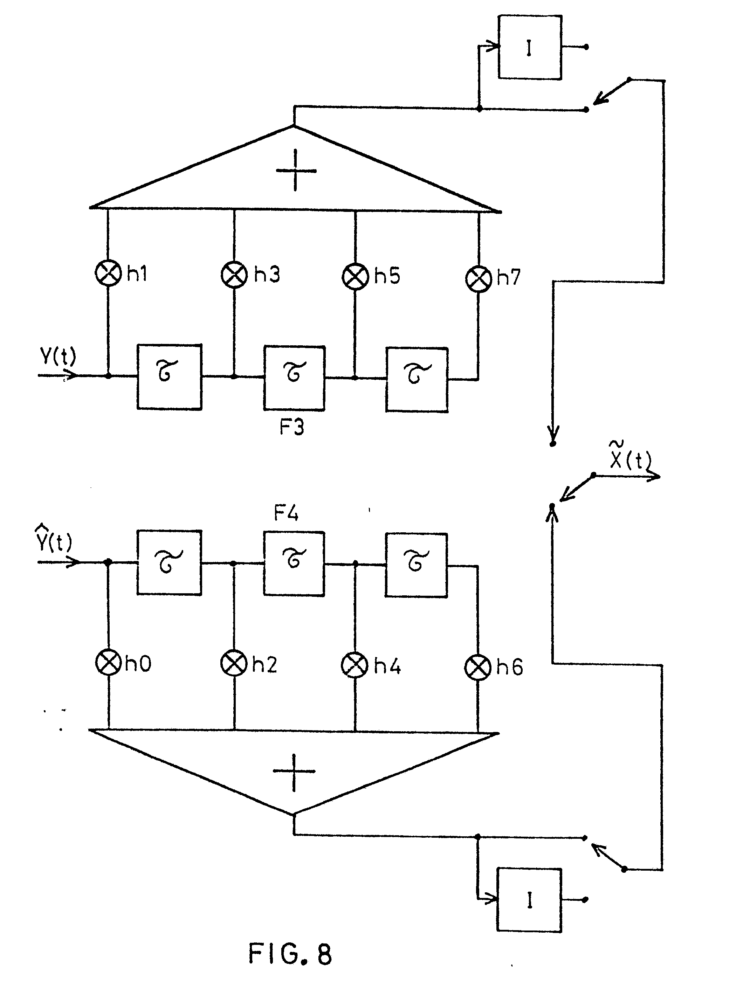

On montre de la même manière que le système de recombinaison des échantillons (figure 5) permettant de reconstruire le signal d'origine peut être réalisé selon le schéma de la figure 8.

Deux filtres transversaux F3' et F4' de longueur K/2 opérant à la fréquence fs/2 reçoivent respectivement les signaux y(t) et ŷ(t). Des inverseurs I placés à la sortie des filtres réalisent ici aussi les fonctions sinus et cosinus définies plus haut. Les coefficients h0, h1, h2, . . ., etc. sont les mêmes que ceux définis ci-dessus.

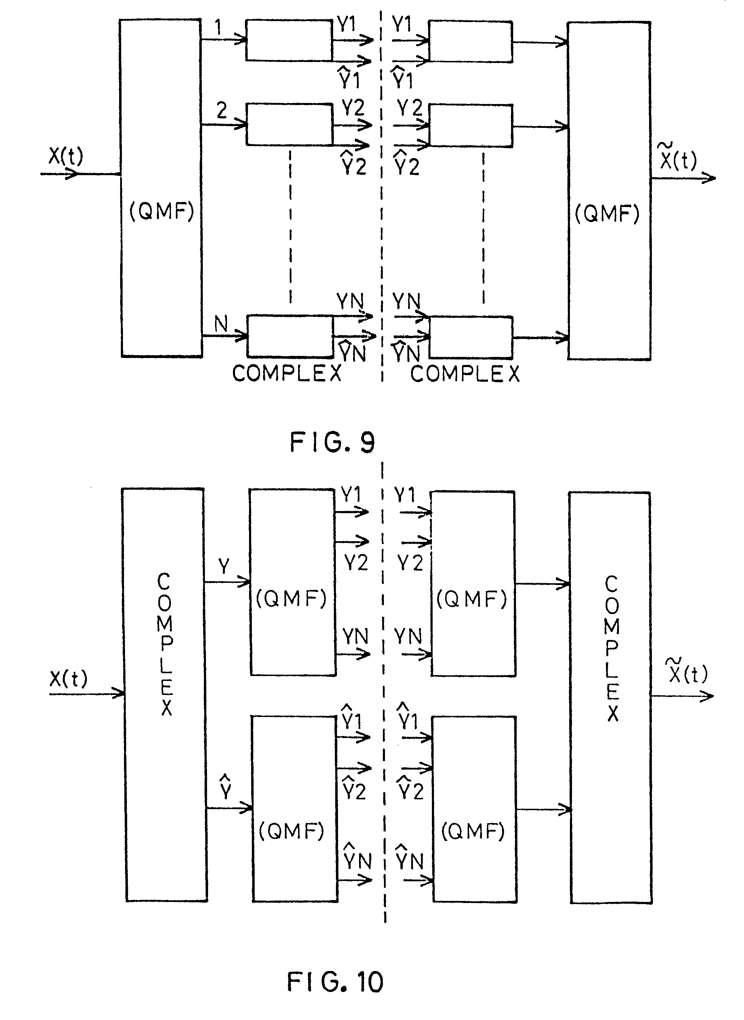

En pratique, comme le montre la figure 2, le codeur de la voix comporte un nombre N de canaux de sous-bandes délivrant chacun deux signaux en quadrature. Le passage à un nombre N quelconque de sous-bandes en quadrature peut être obtenu en combinant les techniques de filtrage complexe décrites ci-dessus avec celles décrites dans l'IBM Technical Disclosure Bulletin, Vol. 19, No. 9 e février 1977, pages 3438 et 3439 ainsi que dans le brevet français No. 7 713 995 délivré à la demanderesse sous le titre: »Procédé de quantification à allocation dynamique du taux de bits disponible, et dispositif de mise en oeuvre dudit procédé«. La combinaison entre le filtrage complexe délivrant deux composantes en quadrature décrit ci-dessus (figures 7 et 8) et la décomposition en plusieurs sous-bandes par les techniques dites QMF (Quadrature Mirror Filter) décrites dans l'article et le brevet français cités ci-dessus peuvent se faire selon l'un ou l'autre des schémas représentés sur les figures 9 et 10. Selon le schéma de la figure 9, durant le codage, la décomposition en sous-bandes utilisant les techniques QMF est effectuée en premier. Le signal de chaque sous-bande est ensuite scindée en deux composantes par traitement par un système de filtrage réalisé notamment selon la figure 7. Pour le décodage la recombinaison des sous-bandes serait alors obtenue en combinant les composantes en quadrature deux à deux à l'aide de dispositifs tels que celui de la figure 8, puis en recombinant les sous-bandes par les techniques QMF pour reconstituer le signal d'origine.

Selon le schéma de la figure 10, l'ordre des opérations entre décomposition en sous-bandes par les techniques QMF et décomposition en signaux conjugués (en quadrature) est inversé par rapport à celui de la figure 9. Mais que l'on choisisse le schéma de la figure 9 ou celui de la figure 10, les principes de base sont les mêmes.

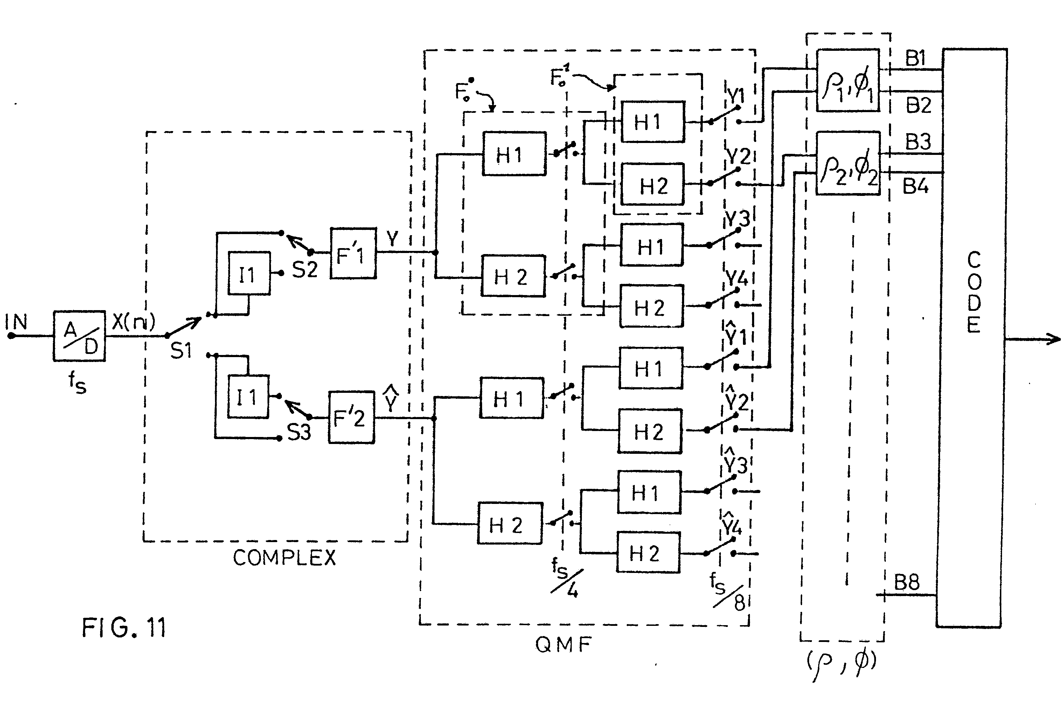

Les techniques QMF de décomposition en sous-bandes (ainsi que celles de reconstruction du signal à partir du contenu des sous-bandes) out été décrites en référence à la figure 4 du brevet français No. 7 713 995, figure e description que l'on incorporera au présent texte. On incorpera de même à ce texte, la publication d'IBM citée plus haut. Toutefois, pour mieux préciser la façon dont les techniques QMF et le filtrage complexe se combinent ici, on a représenté sur la figure 11 un exemple de réalisation du codeur de l'invention (voir figure 2) comportant une description détaillée du dispositif de filtrage réalisé conformément au schéma de la figure 10. Le signal vocal à coder est introduit dans un convertisseur analogique numérique A/D où il est échantillonné à la fréquence fs et codé en PCM (ou MIC) à 12 bits par exemple pour fournir les échantillons x(n). Ce signal est alors soumis à un filtre complexe tel que celui de la figure 7 fournissant les signaux en quadrature y et ŷ. Ces signaux, à une fréquence fs/2, sont respectivement introduits dans une structure en arbre e type QMF. Plus précisément, chacune des branches du filtre complexe, est introduite dans un banc de filtre de décomposition en sous-bandes ayant une structure en arbre et utilisant les techniques dites QMF. On a représenté sur la figure 11 des bancs de QMF traitant y et ŷ en deux étages. Chacun de ces étage comporte des éléments désignées par $Fo^0$ ou $Fo^1$ comportant eux mêmes deux filtres demi-bande en quadrature (H1 et H2) et des interrupteurs de décimation réduisant la fréquence de prélèvement des échantillons par deux. Ceci étant, la quantité globale d'information sur l'ensemble des 2N canaux sortant du filtre désigné par QMF sur la figure 11 reste la même que celle fournie par le convertisseur A/D. A noter que, en pratique le nombre final de sous-bandes sortant du banc de filtres désigne ici par QMF sera supérieur au nombre de sous-bandes représenté sur la figure 11. Ceci est obtenu simplement en augmentant le nombre d'étage du filtre QMF par décomposition de proche en proche. Une fois la décomposition en sous-bandes en quadrature effectuée, les signaux conjugués sont soumis au dispositif $(\rho, \Phi)$ dit dispositif phase-amplitude engendrant les informations de phase et d'amplitude, mentionnées plus haut:

$$\rho_i = \sqrt{y_i^2 + \hat{y}_i^2} \quad \text{et} \quad \Phi_i = \text{Arctg } \frac{\hat{y}_i}{y_i}.$$

A la sortie du dispositif $(\rho, \Phi)$ on dispose de N signaux codés PCM à 12 bits qui sont introduits dans un dispositif de transcodage désigné par CODE. Le codeur CODE recodifie les signaux appliqués sur ses huit enrées par requantification à allocation dynamique du taux de bits global disponible. Le codeur CODE peut être réalisé selon les techniques décrites dans le brevet français No. 7 713 995. Plus précisément l'ensemble de filtrage et de détermination de phases et d'amplitudes comprenant COMPLEX, QMF et $(\rho, \Phi)$ est assimilé au banc de filtres FB du brevet français pré-cité. Les signaux sortant de $(\rho, \Phi)$ sont donc codés en CODE comme le sont les signaux des p sous-bandes désignées par B1, B2, . . ., Bp du brevet français pré-cité (voir notamment les figures 1 et 3 dudit brevet).

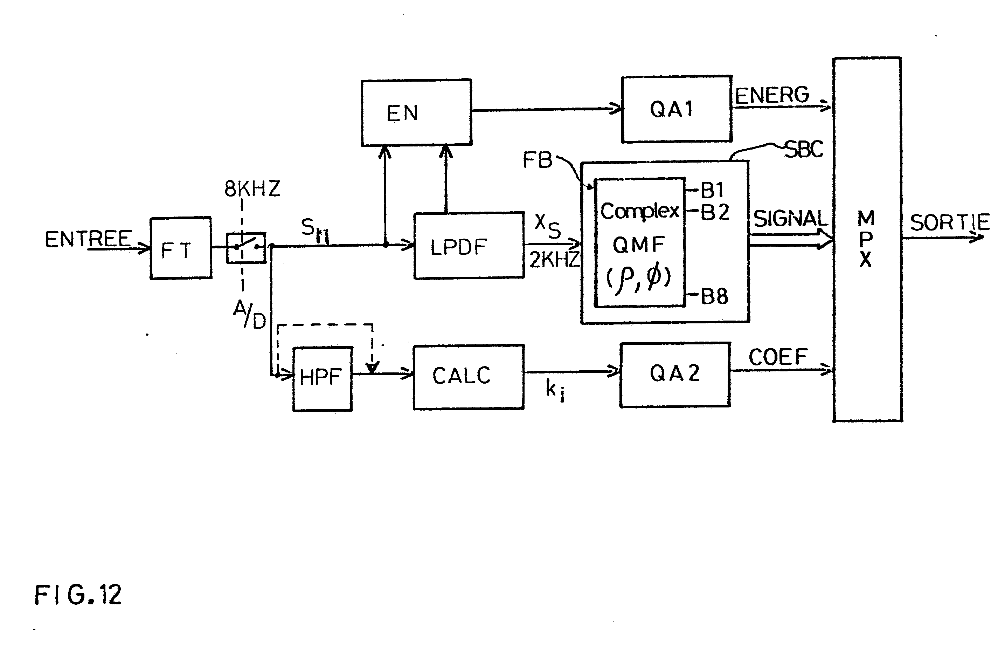

On peut naturellement utiliser d'autres méthodes de transcodage des signaux des N sous-bandes sortant du dispositif $(\rho, \Phi)$. On citera noamment le codeur décrit dans le brevet européen No. 0 002 998 délivré à la demanderesse sous le titre: »Procédé de compression de données relatives au signal vocal et dispositif mettant en oeuvre ledit procédé«. Pour plus de précision on a représenté sur la figure 12, le codeur de la figure 1 du brevet européen cité ci-dessus sur lequel on a montré, à la place du banc de filtres FB (voir figure 3 du brevet européen) l'ensemble (COMPLEX, QMF, $(\rho, \Phi)$).

**Revendications**

1. Procédé de codage (voir fig. 2) d'un signal d'origine vocale dont le spectre est limité à une bande defréquence donnée, procédé du type dans lequel ladite bande de fréquences est divisée en plusieurs sous-bandes dont les contenus sont ensuite codés, ledit procédé étant caractérisé en ce qu'il comporte les opérations suivantes:

traitement desdites sous-bandes (voir BPF'I à BPF'N) pour engendrer les composantes en quadrature de signaux qu'elles contiennent,

traitement desdites composantes en quadrature pour en déduire les informations de phase $(\Phi)$ et d'amplitude $(\rho)$ du signal contenu dans chaque sous-bande, et

codage desdites informations de phase et d'amplitude pour l'ensemble des sous-bandes.

2. Procédé d codage d'un signal d'origine vocale dont le spectre est limité à une bande basses-fréquences dite bande de base, caractérisé en ce qu'il comporte les opérations suivantes:

échantillonnage dudit signal à sa fréquence de Nyquist (fs) et codage des échantillons en numérique à taux de bits relativement élevé,

filtrage du signal échantillonné et codé par un banc de N filtres passe-bandes (BPF') dont les bandes passantes sont relativement étroites et qui délivrent les 2N signaux représentant les N paires de composantes en quadrature des signaux filtrés,

traitement desdits 2N signaux pour en déduire N paires d'informations $(\rho, \Phi$ et 1/2N) phase et amplitude sous-échantillonnées à fs/2N, et

transcodage (CODE) des signaux des N paires d'informations de phase et d'amplitude, par répartition dynamique des bits de transcodage disponibles.

3. Procédé de codage (voir fig. 3) selon la revendication 2 caractérisé en ce que ledit filtrage comporte les opérations suivantes:

modulation (en M1 et M2) du signal échantillonné à la fréquence fs par cos $(2\pi fs\ t)/4$ et sin $(2\pi fs\ t)/4$,

filtrage (en F1 et F2) ds deux signaux obtenus par modulation par des filtres passe-bas (H) ayant une fréquence de coupure à 3—dB à fs/4,

sous-échantillonnage des signaux filtrés par H à la fréquence fs/2; et

filtrage de chacun des deux signaux sous-échantillonnés par un banc de filtres passe-bande de type dit QMF.

4. Procédé de codage selon la revendication 3 caractérisé en ce que ladite modulation du signal par cos $2\pi fs\ t/4$ et sin $2\pi fs\ t/4$ est obtenue en multipliant cycliquement les échantillons par les séquences $(1, 0, -1, 0)$ et $(0, 1, 0, -1)$ respectivement.

5. Dispositif de codage (voir fig. 11) d'un signal d'origine vocale dont le spectre est limité à une bande basses-fréquences dite bande de base, caractérisé en ce qu'il comporte:

des moyens d'échantillonnage (A/D) du signal à sa fréquence de Nyquist (fs),

des moyens de filtrage complexe (COMPLEX) reliés auxdits moyens d'échantillonnage pour engendrer les composantes en quadrature du signal échantillonné, lesdits moyens de filtrage complexe comportant:

des moyens de décimation (S1, S2, S3) reliés auxdits moyens d'échantillonnage et destinés à sous-échantillonner les signaux issus desdits moyens de filtrage par prélèvement d'un échantillon sur deux seulement;

des moyens de modulation (I1, S2, S3) reliés auxdits moyens de décimation et multipliant simultanément lesdits échantillons par les séquences cycliques $(1, 0, -1, 0)$ et $(0, 1, 0, -1)$; et

des moyens de filtrage passe-bas (F'1, F'2) reliés auxdits moyens de modulation, lesdits moyens de filtrage ayant une fréquence e coupure à —3dB à fs/4;

des moyens de filtrage en sous-bandes (QMF) reliés auxdits moyens de filtrage complexe et utilisant les techniques de QMF pour scinder le spectre desdites composantes en quadrature en un nombre donné de sous-bandes,

des moyens dits de phase-amplitude $(\rho, \Phi)$ reliés auxdits moyens de filtrage en sous-bandes et engendrant des informations relatives aux phases et amplitudes des signaux contenus dans lesdites sous-bandes; et
des moyens de codage (CODE) reliés auxdits moyens de phase-amplitude et codant lesdites informations phase et amplitude des sous-bandes.

6. Dispositif de codage d'un signal d'origine vocale dont le spectre est limité à une bande basses-fréquences dite bande de base, caractérisé en ce qu'il comporte:
des moyens d'échantillonnage du signal à sa fréquence de Nyquist fs;
des moyens de filtrage en sous-bande (fig. 9, QMF) reliés auxdits moyens d'échantillonnage et utilisant les techniques dites de QMF pour scinder le spectre dudit signal en N sous-bandes adjacentes dans lesquelles les signaux sont sous-échantillonnés de manière à maintenir la quantité d'information disponible sur l'ensemble des N sous-bandes, invariante par rapport à celle du signal fourni par lesdits moyens d'échantillonnage;
des moyens de filtrage complexe (COMPLEX) reliés auxdits moyens de filtrage en sous-bande pour en déduire les composantes (Y, Ŷ) en quadrature du signal contenu dans chacune desdites sous-bandes;
des moyens de détermination de phase et d'amplitude (fig. 11, $\Phi$ et $\rho$) du signal contenu dans chacune desdites sous-bandes, lesdits moyens de détermiation phase-amplitude étant reliés auxdits moyens de filtrage complexe;
des moyens de codage (CODE) reliés auxdits moyens de détermination phase-amplitude pour coder lesdites informations de phase et d'amplitude de chacune des sous-bandes.

7. Dispositif de codage selon l'une des revendications 5 ou 6 caractérisé en ce que lesdits moyens de codage utilisent les techniques allouant dynamiquement les bits disponibles pour le codage en les répartissant entre les signaux des sous-bandes à coder selon l'énergie contenue dans chacune desdites sous-bandes.

8. Dispositif de codage (voir fig. 11) d'un signal d'origine vocale x(t) dont le spectre est limité à une bande basses-fréquences dite bande de base, caractérisé en ce qu'il comporte:
des moyens d'échantillonnage (A/D) du signal à sa fréquence de Nyquist (fs) et de codage en numérique du signal échantillonné;
des moyens defiltrage complexe (COMPLEX) reliés auxdits moyens d'échantillonnage et de codage pour engendrer les composantes en quadrature y et ŷ du signal échantillonné, lesdits moyens de filtrage complexe comportant:

un premier commutateur (S1) orientant alternativement les échantillons vers un second (S2) ou vers un troisième (S3) commutateur;
un premier inveseur (I1) placé entre lesdits premier second commutateurs;
un second inverseur (I2) placé entre lesdits premier et troisième commutateurs;
un premier et un second filtre numérique (F'1, F'2) dont les entrées sont respectivement reliées auxdits second et troisième commutateurs et délivrant respectivement lesdites composanes en quadrature y et ŷ, lesdits filtres numériques ayant respectivement pour coefficients les coefficients pairs et les coefficients impairs d'un filtre passe-bas coupant à fs/4 à —3dB;

des premiers et seconds moyens de filtrage en sous-bandes (QMF) reliés respectivement auxdits premier et second filtres numériques et découpant les spectres de chacun desdits filtres numériques en N sous-bandes relativement étroites contenant les signux $y_i$ et $\hat{y}_i$ pour $i = 1, 2, \ldots, N$, respectivement;
des moyens de phase-amplitude ($\rho$, $\Phi$) reliées auxdits moyens de filtrage en sous-bandes et engendrant les informations:

$$\rho_i = \sqrt{y_i^2 + \hat{y}_i^2} \ \ et \ \Phi_i = \ Arctg \ \frac{\hat{y}_i}{y_i}; \ et,$$

des moyens de transcodage (CODE) reliés auxdits moyens phase-amplitude et transcodant les $\rho_i$ et $\Phi_i$ par répartition dynamique entre les 2N sous-bandes du taux de bits alloué au transcodage de l'ensemble des 2N sous-bandes.

**Patentansprüche**

1. Sprachkodierungsverfahren (siehe Figur 2) eines stimmhaften Signals mit einem durch ein bestimmtes Frequenzband begrenzten Spektrum, des Typs, in dem das Frequenzband in mehreren Unterbändern unterteilt ist, deren Inhalte später kodiert sind, wobei das Verfahren dadurch gekennzeichnet ist, daß es folgende Vorgänge aufweist:
Verarbeitung der Unterbänder (siehe BPF'l bis BPF'N) zur Generierung von den Komponenten der Phasenverschiebung um 90° der in den Unterbändern vorliegenden Signalen,
Verarbeitung der Komponenten der Phasenverschiebung um 90° des in jedem Unterband enthaltenen Signals, um daraus jeweils Information über seine Phase ($\Phi$) und seine Amplitude ($\rho$) abzuleiten, und Kodierung der Phase- und Amplitude-Information bei den gesamten Unterbändern.
2. Sprachkodierungsverfahren eines stimmhaften Signals mit einem durch ein bestimmtes als

7

Grundbandbreite bezeichnetes Niederfrequenzband begrenzten Spekrum, dadurch gekennzeichnet, daß es folgende Vorgänge aufweist:
Probenahme des Signals bei seiner Nyquistfrequenz (fs) und numerische Kodierung der entnommenen Abtastwerte mit relativ hohen Bitraten,
Filtern des abgetasteten und von einer Bank von N Bandpaßfiltern (BPF') kodierten Signals, wo die Bänder relativ eng sind und 2N Signale liefern, die die N Paare von Komponenten der Phasenverschiebung um 90° der filtrierten Signale darstellen,
Verarbeitung der 2N Signale, um daraus N Paare von einer Probenahme bei fs/2N unterstellten Informationen $(\rho, \Phi)$ bezüglich der Phase und der Amplitude abzuleiten, und
Codeumwandlung (CODE) der Signale der N Paare von Informationen bezüglich der Phase und der Amplitude durch die dynamische Aufteilung der verfügbaren Codeumwandlungs-Bits.

3. Sprachkodierungsverfahren (siehe Figur 3) nach Anspruch 2, dadurch gekennzeichnet, daß das Filtern folgende Vorgänge aufweist:
Modulation (bei M1 und M2) des bei der Frequenz fs abgetasteten Signals durch cos (2$\pi$fs t)/4 und sin (2$\pi$fs t)/4,
Filtern (bei F1 und F2) der zwei Signale, die aus der Modulation mittels Tiefpaßfilter (H) mit einer Trennfrequenz bei −3dB für fs/4 resultieren,
Unterprobenahme der filtrierten Signale durch H bei der Frequenz fs/2, und
Filtern von jedem der zwei Signale durch eine Bank von Bandpaßfiltern des sogenannten QMF-Types.

4. Sprachkodierungsverfahren nach Anspruch 3, dadurch gekennzeichnet, daß die Modulation des Signals durch cos (2$\pi$fs t)/4 und sin (2$\pi$fs t)/4 dadurch erreicht ist, daß die Abtastwerte zyklisch durch die jeweiligen Sequenzen (1,0, −1, 0) und (0,1, 0, −1) multipliziert sind.

5. Sprachkodierungsanordnung (siehe Figur 11) eines stimmhaften Signals, dessen Spektrum durch eines Niederfrequenzband begrenzt ist, dadurch gekennzeichnet, daß sie aufweist:
Probenahme-Mittel (A/D) für das Signal bei seiner Nyquistfrequenz (fs),
Mittel zum komplexen Filtern (COMPLEX), die mit den Probenahme-Mitteln zur Generierung der Komponente der Phasenverschiebung um 90° des abgetasteten Signals verbunden sind, wo diese Mittel zum komplexen Filtern aufweisen:

mit den Mitteln für die Probenahme verbundene Mittel zur Unterdrückung (S1, S2, S3), die für die Unterprobenahme der aus den Filtermitteln stammenden Signale durch Abfangen nur jedes zweiten Abtastwertes bestimmt sind;
mit den Mitteln zur Unterdrückung verbundene Mittel für die Modulation (I1, S2, S3), die gleichzeitig die Abtastwerte durch die zyklischen Sequenzen (1,0, −1,0) und (0,1, 0, −1) multiplizieren; und
Tiefpaßfilter (F'1, F'2), die mit den Mitteln für die Modulation verbunden sind, wo die Filtermitteln eine Trennfrequenz bei −3dB für fs/4 aufweisen;

mit den Mitteln zum komplexen Filtern verbundene Mittel zum Filtern in Unterbändern (QMF), die QMF-Techniken zur Teilung des Spektrums der Komponente der Phasenverschiebung um 90° in einer bestimmten Anzahl von Unterbändern verwenden;
sogenannte Phase-Amplitude-Mittel $(\rho, \Phi)$, die mit den Mitteln zum Filtern in Unterbändern verbunden sind und die Informationen bezüglich der Phasen und der Amplituden der in den Unterbändern vorliegenden Signale generieren; und
mit den Phase-Amplitude-Mitteln verbundene Kodiermittel (CODE), die die Informationen bezüglich der Phase und der Amplitude der Unterbänder kodieren.

6. Sprachkodierungsanordnung eines stimmhaften Signals mit einem durch ein als Grundbandbreite genanntes Niederfrequenzband begrenzten Spektrum, dadurch gekennzeichnet, daß sie aufweist:
Mittel zur Probenahme des Signals bei seiner Nyquistfrequenz fs;
mit den Mitteln zur Probenahme verbundene Mittel zum Filtern im Unterband (Figur 9, QMF), die die sogenannten QMF-Techniken zur Teilung des Spektrums des Signals in N angrenzenden Unterbändern verwenden, in denen die Signale des Unterprobenahme derartig unterstellten, daß die für die gesamten N Unterbänder verfügbare Menge von Informationen invariant verglichen zu der Menge der dem von den Mitteln zur Probenahme stammenden Signal entsprechenden Informationen behalten ist;
Mittel zum komplexen Filtern (COMPLEX), die mit den Mitteln zum Filtern in einem Unterband verbunden sind, so daß die Komponenten (Y, Ŷ) der Phasenverschiebung um 90° des in jedem Unterband vorliegenden Signals abgeleitet werden;
Mittel zur Ermittlung der Phase und Amplitude (Figur 11, $\Phi$ und $\rho$) des in jedem Unterband vorliegenden Signals, wobei diese Mittel mit den Mitteln zum komplexen Filtern verbunden sind;
mit den Mitteln zur Ermittlung der Phase und Amplitude verbundene Kodierungsmittel (CODE) zum Kodieren der Informationen bezüglich der Phase und Amplitude von jedem Unterband.

7. Sprachkodierungsverfahren nach einem der Ansprüche 5 oder 6, dadurch gekennzeichnet, daß die Mittel zur Kodierung Techniken zur dynamischen Zuteilung von den für die Kodierung verfügbaren Bits durch deren Aufteilung unter den zu kodierenden Signalen der Unterbänder der in jedem Unterband enthaltenen Energie entsprechend verwenden.

**0 070 948**

8. Sprachkodierungsanordnung (siehe Figur 11) eines stimmhaften Signals x(t) dessen Spektrum auf ein als Grundbandbreite bezeichnetes Niederfrequenzband begrenzt ist, dadurch gekennzeichnet, daß sie aufweist:

Mittel zur Probenahme (A/D) des Signals bei seiner Nyquistfrequenz (fs) und zur numerischen Kodierung des abgetasteten Signals;

Mittel zum komplexen Filtern (COMPLEX), die mit den Mitteln zur Probenahme und Kodierung zum Generieren der Komponenten der Phasenverschiebung um 90° y und ŷ des abgetasteten Wertes verbunden sind, wobei die Mittel zum komplexen Filtern aufweisen:

> einen ersten Schalter (S1), die abwechselnd die Abtastwerte zu einem zweiten (S2) oder einem dritten (S3) Schalter führen;
> einen ersten zwischen dem ersten und dem zweiten Schalter geschalteten Inverter (I1);
> einen zweiten zwischen dem ersten und dem dritten Schalter geschalteten Inverter (I2);
> einen ersten und einen zweiten numerischen Filter (F'1, F'2), deren Eingänge jeweils mit dem zweiten und dem dritten Schalter verbunden sind und jeweils die Komponenten der Phasenverschiebung um 90° y und ŷ liefern, wobei die numerischen Filter als jeweilige Koeffizienten gerade und ungerade Koeffizienten eines Tiefpaßfilters mit einer Trennung von —3dB für fs/4 aufweisen;

erste und zweite jeweils mit dem ersten und dem zweiten numerischen Filter verbundene Mittel zum Filtern in Unterbändern (QMF), die die Spektren der jeweiligen numerischen Filter in N relativ engen Unterbändern trennen, die die Signale $y_i$ und $\hat{y}_i$ jeweils für $i = 1, 2, \ldots, N$ enthalten;

mit den Mitteln zum Filtern in Unterbändern verbundene Phase- und Amplitude-Mittel ($\rho$, $\Phi$), die die folgenden Informationen generieren:

$$\rho = \sqrt{y_i^2 + \hat{y}_i^2} \text{ und } \Phi_i = \text{Arctg } \frac{\hat{y}_i}{y_i}; \text{ und,}$$

mit den Phase-Amplitude-Mitteln verbundene Mittel zur Codeumwandlung (CODE), die die $\rho_i$ und $\Phi_i$ durch dynamische Aufteilung der Bitrate, die die Codeumwandlung der gesamten 2N Unterbändern zugeordnet ist, unter den 2N Unterbändern umwandeln.

## Claims

1. A method of coding (see Fig. 2) a voice signal the spectrum of which is limited to a given freqency band, of the type in wich said frequency band is split into several sub-bands the contents of which are subsequently coded, said method being characterized in that it includes the steps of:
processing said sub-bands (BPF'l to BPF'N) to generate the quadrature components of the signals contained therein,
processing said quadrature components to derive therefrom phase ($\Phi$) and amplitude ($\rho$) information pertaining to the signal in each sub-band, and
codding said phase and amplitude information pertaining to the signals in all sub-bands.

2. A method of coding a voice signal the spectrum of which is limited to a low-frequency band called baseband, characterized in that it includes the steps of:
sampling said signal at the Nyquist frequency (fs) thereof and coding the samples at a relatively high bit rate,
passing the sampled and coded signal through a bank of N bandpass filters (BPF') the bandwidth of which are relatively narrow and which provide 2 N signals representing N pairs of quadrature components of the filtered signals,
processing said 2 N signals to derive therefrom N pairs of phase ($\Phi$) and amplitude ($\rho$) information signals down-sampled at fs/2 N, and
transcoding each of said pairs of phase and amplitude information signals with a dynamic distribution of the available transcoding bits.

3. A method of coding (see Fig. 3) according to claim 2, characterized in that said filtering includes the steps of:
modulating (at M1 and M2) the signal sampled at frequency fs by cos $(2\pi\text{fs t})/4$ and sin $(2\pi\text{fs t})/4$,
passing (at F1 and F2) the two signals resulting from the modulation process through low-pass filters (H) having a cutoff frequency of fs/4 at —3dB,
down-sampling the signals passed through H at a frequency of fs/2, and
passing each of the two down-sampled signals through a bank of QMF-Type band-pass filters.

4. A method of coding according to claim 3, characterized in that said modulation of the signal by cos (2 fs t)/4 and sin (2 fs t)/4 is performed by cyclically multiplying the samples y sequences (1,0, —1,0) and (0,1, 0, —1), respectively.

5. A device (see Fig. 11) for coding a voice signal the spectrum of which is limited to a low-frequency band called baseband, characterized in that it includes:

sampling means (A/D) for sampling the signal at its Nyquist frequency (fs), complex filtering means (COMPLEX) connected to said sampling means for generating the quadrature components of the ampled signal, said complex filtering means comprising:

decimation means (S1, S2, S3) connected to said sampling means for down-sampling the output signals from said filtering means by dropping every second sample;

modulation means (I1, S2, S3) connected to said decimation means for simultaneously multiplying said samples by said cyclic sequence (1,0, −1,0) and (0,1,0, −1); and

low-pass filter means (F'1, F'2) connected to said modulation means and exhibiting a cutoff frequency of fs/4 at −3dB,

sub-band filtering means (QMF) connected to said complex filtering means for splitting the frequency spectrum of said quadrature components into a given number of subbands through the use of QMF techniques;

so-called phase-emplitude means ($\Phi$, $\rho$) connected to said sub-band filtering means for generating phase and amplitude information pertaining to the signals contained in said sub-bands; and

coding means (CODE) connected to said phase-amplitude means for coding said phase and amplitude information pertaining to signals in said sub-bands.

6. A device for coding a voice signal the spectrum of which is limited to a low requency band called baseband, characterized in that it includes:

sampling means for sampling the voice signal at its Nyquist frequency fs;

sub-band filtering means (Fig. 9, QMF) connected to said sampling means for splitting the frequency spectrum of said signal, using QMF techniques, into N adjacent sub-bands whose contents are down-sampled so as to cause the available amount of information peraining to all of the N subbands to remain constant with respect to that pertaining to the signal supplied by said sampling means, complex filtering means (COMPLEX) connected to said subband, filtering means for deriving therefrom the quadrature (Y, Ŷ) of the signal contained in each of said sub-bands, components

phase and amplitude determination means (Fig. 11, $\Phi$ and e) connected to said complex filtering means for determining the phase ($\Phi$) and the amplitude (e) of the signal within each of said sub-bands, and

coding means (CODE) connected to said phase-amplitude determination means for coding said phase and amplitude information pertaining to the signal contained in each subband.

7. A coding device according to claim 5 or 6, characterized in that said coding means uses techniques which dynamically allocate the available bit resources by distributing them among the subband signals to be coded in accordance with the energy content in each of said subbands.

8. A coding device (see Fig. 11) for coding a voice signal X(t) the spectrum of which is limited to a low-frequency band called baseband, characterized in that it comprises:

sampling means (A/D) for sampling the signal at its Nyquist frequency (fs) and for digitally coding the sampled signal;

complex filtering means (COMPLEX) connected to said sampling and coding means for generating the quadrature components y and ŷ of the sampled signal said complex filtering means comprising:

a first switch (S1) for alternately routing the samples to a second (S2) or to a third (S3) switch;

a first inverter (I1) disposed between said first and second switches;

a second inverter (I2) disposed between said first and third switches;

first and second digital filters (F'1, F'2) the inputs of which are respectively connected to said second and third switches and which respectively provide said quadrature components y and ŷ, the respective coefficients of said digital filters being the even coefficients and the odd coefficients of a low-pass filter having a cutoff frequency of fs/4 at −3dB;

first and second sub-band filtering means (QMF) respectively connected to said first and second digital filters for splitting the spectrum of each of said digital filters into N relatively narrow sub-bands containing signals $Y_i$ and $\hat{y}_i$, with i = 1, 2, . . ., N, respectively;

phase-amplitude means ($\Phi$, e) connected to said first and second sub-band filtering means for generating the following information:

$$\rho_i = \sqrt{y_i^2 + \hat{y}_i^2} \text{ and } \Phi_i = \text{Arctan } \frac{\hat{y}_i}{y_i}; \text{ and}$$

transcoding means (CODE) connected to said phase-amplitude means for transcoding the $p_i$ and $\Phi_i$ by dynamically distributing among the 2 N sub-bands the transcoding bit resources available for the 2 N sub-bands.

FIG. 1

FIG. 2

FIG. 3

FIG. 4

FIG. 5

FIG. 6

FIG. 7

FIG. 8

FIG. 9

FIG. 10

FIG. 11

0 070 948

FIG.12